Europäisches Patentamt

European Patent Office

Office européen des brevets

(11) Numéro de publication: **0 230 187 B1**

# FASCICULE DE BREVET EUROPEEN

(45) Date de publication de fascicule du brevet: **04.03.92** (51) Int. Cl.⁵: **A23C 19/05**

(21) Numéro de dépôt: **86402829.5**

(22) Date de dépôt: **16.12.86**

(54) **Procédé de fabrication de fromages à pâte pressée non cuite ou semi-cuite.**

(30) Priorité: **17.12.85 FR 8518685**

(43) Date de publication de la demande:
**29.07.87 Bulletin 87/31**

(45) Mention de la délivrance du brevet:
**04.03.92 Bulletin 92/10**

(84) Etats contractants désignés:
**BE CH DE ES FR GB GR IT LI NL SE**

(56) Documents cités:
**US-A- 3 886 288**

**JOURNAL OF DAIRY SCIENCE, vol. 64, no. 3, mars 1981, pages 523-525, Champaign, Illinois, US; C.L. HICKS et al.: "Equipment and procedure for manufacturing laboratory cheese curd"**

**JOURNAL OF DAIRY RESEARCH, vol. 22, 1955, pages 365-373; L.A. MABBITT et al.: "Experiments in cheesemaking without starter"**

(73) Titulaire: **Roquette Frères**

**F-62136 Lestrem(FR)**

(72) Inventeur: **Bussière, Guy**
**9, rue Clément Ader**
**F-31520 Ramonville(FR)**
Inventeur: **Lablée, Jean**
**13 Grande Rue**
**F-25660 Mamirolle(FR)**

(74) Mandataire: **Koch, Gustave et al**
**Cabinet PLASSERAUD 84, rue d'Amsterdam**
**F-75009 Paris(FR)**

EP 0 230 187 B1

Rank Xerox (UK) Business Services

## Description

L'invention a pour objet un nouveau procédé de fabrication de fromages à pâte pressée non cuite ou semi-cuite.

Plus précisément, l'invention a pour objet un nouveau procédé de fabrication de fromages à pâte pressée, non cuite ou semi-cuite, selon lequel l'acidification du lait avant l'emprésurage est effectuée de façon contrôlée au moyen d'un agent acidogène.

L'invention concerne donc un procédé de fabrication de fromages comprenant une étape de pressage et éventuellement une étape de semi-cuisson de la pâte.

Dans le cadre de l'invention, on entend par fromages à pâte pressée non cuite ou semi-cuite, notamment ceux dont le procédé de fabrication comporte une phase de pressage, et généralement des phases de lavage du caillé et/ou de chauffage du mélange caillé-sérum jusqu'à une température ne dépassant pas 45°C et dont l'extrait sec est généralement compris entre 45 et 60 %, tels les fromages de type Port-Salut, tomes, Mamirolle, cantal, gouda, édam, Tilsit, Saint-Paulin, reblochon et morbier, fromages pour la fonte.

Plusieurs études ont été menées jusqu'à ce jour en vue d'industrialiser les fabrications de ce type de fromage dont tout particulièrement celle du cheddar.

Pour ce faire, des agents acidogènes dont notamment la gluconodeltalactone (GDL) ont été utilisés à différents stades de la fabrication de ce cheddar, l'acidification du caillé étant due à l'agent acidogène seul ou en combinaison avec des ferments lactiques.

Le cheddar est un fromage particulier, au sens qu'il présente deux étapes originales de fabrication à savoir la cheddarisation et le broyage, après cuisson du caillé.

La cheddarisation consiste à faire subir au caillé cuit et découpé en forme de blocs des retournements successifs durant 2 heures environ à une température proche de celle de la cuisson.

Cette étape permet une acidification progressive du fromage, une augmentation de la matière sèche et une modification de la texture.

Cette étape est suivie d'un broyage poussé du caillé avec ajout de sel et des étapes conventionnelles de pressage et d'affinage.

La particularité de ces fromages eu égard à ces opérations de cheddarisation et de broyage, réside dans le développement de la totalité de l'acidité avant le formage et le pressage, ce qui les différencie fondamentalement des fromages à pâtés pressées semi-cuites ou non cuites au sens où cette expression est entendue selon l'invention.

Cette différence tend à expliquer que rien à ce jour n'ait été tenté pour extrapoler les études faites sur le cheddar aux autres pâtes pressées non cuites ou semi-cuites et qu'ainsi la notion de maîtrise du pH à l'emprésurage n'ait pas encore trouvé de solution.

Ainsi la fabrication de fromages à pâte pressée non cuite ou semi-cuite concernée par l'invention est constituée par les étapes suivantes : préparation du lait, emprésurage, coagulation, mise en forme et affinage.

Par "mise en forme" on entend ici un traitement comprenant au moins l'une et au plus l'ensemble des opérations suivantes : découpage-décaillage-brassage, lavage éventuel, chauffage éventuel, moulage-égouttage, pressage, démoulage-salage.

Les différentes étapes mentionnées ci-dessus seront explicitées ci-après.

### Préparation du lait

Cette phase sous-entend les opérations de traitement thermique éventuel du lait cru et de maturation par action de ferments lactiques qui conduisent à une acidification du lait jusqu'à une valeur de pH correspondant aux exigences requises pour l'étape ultérieure d'emprésurage, généralement comprise entre 6,65 et 6,30.

### Emprésurage

Le lait maturé est additionné d'enzymes coagulantes.

### Coagulation

Les caractéristiques du coagulum sont étroitement dépendantes de la cinétique de coagulation. Parmi les quatre paramètres de base régissant cette réaction physicochimique, qui sont : les enzymes coagulantes, le calcium soluble, la température et l'acidification, l'acidification générée par l'activité fermentaire doit évoluer progressivement durant toute la durée des phases de coagulation et d'égouttage.

## Découpage-décaillage-brassage

Cette étape a pour mission de diviser le caillé jusqu'à l'obtention de grains ayant une taille désirée.

## Lavage éventuel

Il a pour effet de désacidifier le caillé.

## Chauffage éventuel

Il a pour effet, entre autres d'accentuer la sortie du sérum des grains de caillé.

## Moulage-égouttage

## Pressage

Cette phase permet la mise en forme et l'obtention de la cohésion du fromage, tout en achevant l'extraction du sérum.

## Démoulage-salage

A ce stade, le fromage doit avoir atteint une valeur de pH comprise entre 4,80 et 5,40, cette valeur étant liée au type de fromage à pâte pressée non cuite ou semi-cuite produit, en fonction des propriétés organoleptiques recherchées pour le produit fini.

## Affinage

Il s'agit de l'ultime étape de la fabrication de ces fromages. Elle consite à conserver le fromage dans des conditions contrôlées de température et d'humidité, en vue d'optimiser les propriétés organoleptiques, texture et flaveur notamment.

En tout état de cause, dans la fabrication des différents types de fromages à pâte pressée non cuite ou semi-cuite au sens où cette expression est entendue selon l'invention, la phase de préparation du lait présente une importance primordiale ; l'invention vise à améliorer cette phase.

De nombreux travaux ont concerné la phase relative à la préparation du lait. C'est ainsi que l'on préfère aujourd'hui traiter thermiquement le lait cru en vue de la destruction de sa flore banale afin d'améliorer la qualité bactériologique du lait et d'accroître sa conservabilité. Cette technique est maintenant largement utilisée dans les ateliers de grand litrage, alors que l'emploi du lait cru est plutôt réservé aux ateliers de dimensions plus modestes ou à la fabrication de fromages devant, pour des raisons d'appellation d'origine, impérativement etre préparés à partir de lait cru.

Il reste néanmoins indéniable que la présence de ferments lactiques est indispensable dans les techniques fromagères. En effet, ces ferments lactiques jouent un rôle essentiel dans la phase d'acidification du lait conduisant à la formation du coagulum et dans la phase d'acidification du caillé jusqu'en fin d'égouttage, ainsi que dans le développement des propriétés organoleptiques du produit fini.

Dans le cas du lait cru, la flore lactique banale naturellement présente dans le lait assure traditionnellement l'acidification, sans que puisse être exclue l'éventualité de renforcer son action par un apport complémentaire de cultures de ferments lactiques.

Dans le cas d'un lait traité thermiquement, il est nécessaire d'ensemencer en cultures de ferments lactiques, selon des techniques appropriées. C'est ainsi que de nombreuses variantes existent aujourd'hui en raison notamment du fait que le temps séparant le moment de l'arrivée du lait à l'usine de celui de sa mise en fabrication fromagère (emprésurage) est éminemment variable car dépendant entre autres des techniques de collecte, des aires géographiques de ramassage, de la période de l'année, du moment de la semaine ...

Assez généralement, la phase de préparation du lait comprend, outre le traitement thermique et la standardisation de la composition en matières grasses et protéiques, une étape de maturation dont la cinétique d'acidification est fonction de la température et bien entendu de la quantité de levains lactiques ajoutés. Cette addition de ferments lactiques doit être modérée afin de tendre vers une maîtrise de cette fermentation et de pouvoir effectuer l'emprésurage au pH requis.

Le pH d'emprésurage doit être parfaitement respecté selon le type de fromage à pâte pressée non cuite ou semicuite fabriqué. Aussi, compte tenu de la phase de croissance quasi-exponentielle de la flore lactique, le pH décroît trop rapidement, ce qui rend extrêmement délicate la détermination du moment auquel doit se faire l'apport des enzymes coagulantes.

Or, il est bien connu de l'homme du métier que le pH à l'emprésurage conditionne la coagulation et les opérations ultérieures, ainsi que les caractéristiques du produit fini.

Il y a donc un intérêt certain à la mise au point d'un nouveau procédé rendant possible d'éliminer les inconvénients susdécrits, inhérents à l'opération de préparation du lait en vue de la fabrication de fromages à pâte pressée non cuite ou semi-cuite.

Ce but n'a pas été atteint par les techniques décrites d'une part, dans le US-A-2 982 654 et, d'autre part, dans la publication "Journal of Dairy Science", vol. 64, no.3, mars 1981, pages 523-525, techniques qui proposent de remplacer, dans la fabrication de fromages très différents de ceux à pâte pressée non cuite ou semi cuite, les ferments acidifiants par un agent acidogène.

Or, la Société Demanderesse a mis au point un nouveau procédé de fabrication de fromages à pâte pressée non cuite ou semi-cuite permettant la maîtrise de l'étape de préparation du lait, favorisant ainsi l'automatisation des lignes de fabrication, et ceci sans que les propriétés organoleptiques des produits finis se trouvent modifiées de façon désavantageuse.

Ce nouveau procédé de fabrication de fromages à pâte pressée non cuite ou semi-cuite est caractérisé par le fait que:

- l'on mesure le pH initial et la température initiale du lait à partir duquel doit être préparé le fromage à pâte pressée non cuite ou semi-cuite,
- l'on sélectionne un agent acidogène dans le groupe comprenant les gluconolactones et les glucoheptonolactones,
- l'on détermine la période de temps à l'intérieur de laquelle le pH du lait sera amené de son pH initial à un pH d'emprésurage, le pH d'emprésurage étant compris entre 6,65 et 6,30, ce pH étant le pH d'emprésurage du type de fromage à pâte pressée non cuite ou semi-cuite devant être fabriqué, ainsi que la quantité d'agent acidogène nécessaire pour amener le pH initial du lait jusqu'au susdit pH d'emprésurage, lesdites période de temps et quantité d'agent acidogène étant déterminées à partir de la connaissance de la cinétique de transformation de l'agent acidogène à ladite température du lait,
- l'on amène le pH du lait au pH d'emprésurage par addition de ladite quantité d'agent acidogène,
- l'on emprésure le lait ainsi préparé par addition d'enzymes coagulantes,
- l'on coagule le lait emprésuré et l'on procède aux étapes de
  - découpage-décaillage-brassage,
  - moulage-égouttage,
  - pressage,
  - démoulage-salage et
  - affinage.

La Demanderesse a en effet constaté que, de façon surprenante, l'utilisation d'un agent acidogène permettait d'atteindre de façon simple et fiable, des pH avant emprésurage relativement acides, et ceci dans un temps prédéterminé et sans affecter de façon défavorable les étapes ultérieures de la fabrication du fromage à pâte pressée non cuite ou semi-cuite et les caractères organoleptiques des produits obtenus.

Le lait, matière première servant à la fabrication des fromages à pâte pressée non cuite ou semi-cuite selon la présente invention, peut être n'importe quel lait ou mélange de laits de toute origine, en particulier ceux mis en oeuvre habituellement dans la fabrication des fromages à pâte pressée non cuite ou semi-cuite selon l'art antérieur.

Par agent acidogène, on entend ici toute substance neutre du point de vue du pH et capable, après solubilisation en milieu aqueux, de se transformer progressivement en acide.

Parmi les substances de ce type, figurent certains anhydrides d'acides, les lactides et notamment ceux à bas point de fusion de l'acide lactique, les lactones telles que les gluconolactones et les glucoheptonolactones, et similaires et/ou leurs mélanges.

Ces définitions étant données, l'invention a pour objet un procédé de fabrication de fromages à pâte pressée non cuite ou semi-cuite selon lequel on effectue les étapes successives de préparation du lait, emprésurage, coagulation, mise en forme et affinage, caractérisé par le fait qu'au cours de la phase de préparation du lait, celui-ci est acidifié de manière contrôlée jusqu'à une valeur de pH comprise entre 6,65 et 6,30 à l'aide d'un agent acidogène.

Il est bien connu que la cinétique de transformation d'un agent acidogène en acide est strictement dépendante de la température du milieu aqueux dans lequel il est solubilisé. En conséquence, à partir des trois paramètres de base du lait utilisé dans l'industrie fromagère qui sont :
- le pH initial du lait,
- le pH requis pour l'emprésurage,
- la température du lait,

le technicien peut déterminer avec précision la dose d'agent acidogène à incorporer et le temps requis pour atteindre le pH d'emprésurage voulu, connaissant avec certitude la cinétique d'hydrolyse de l'agent acidogène.

Cette amélioration apportée par l'addition d'agent acidogène au moment de la maturation conduit donc à une parfaite et totale maîtrise de la phase de préparation du lait, améliorant ainsi les conditions d'automatisation des lignes de production de fromages à pâte pressée non cuite ou semi-cuite.

Cet apport d'agent acidogène peut être effectué indifféremment sous la forme de poudre ou sous la forme de solution.

Dans le cas où l'agent acidogène est ajouté sous la forme pulvérulente, sa dispersion dans le lait et sa solubilisation sont assurées par tout moyen d'agitation approprié.

Dans le cas où il est préféré d'apporter cet agent acidogène sous la forme d'une solution, celle-ci est avantageusement préparée au moment de l'emploi afin de limiter autant que faire se peut l'hydrolyse de l'agent acidogène. En effet si, de par cette hydrolyse, la solution d'agent acidogène présentait une trop grande acidité, les inconvénients bien connus liés à l'emploi direct d'acides dans la production industrielle de fromages à pâte pressée non cuite ou semi-cuite apparaîtraient de nouveau.

Dans la pratique, et compte tenu des particularités propres à chaque ligne de fabrication de fromages à pâte pressée non cuite ou semi-cuite ,le technicien, connaissant la cinétique d'hydrolyse de l'agent acidogène employé, déterminera le meilleur moment pour l'introduire.

A titre indicatif, l'agent acidogène pourra être introduit :
- dans le lait cru, ou
- dans le lait après le traitement thermique éventuel.

Il est bien entendu que d'autres variantes pourraient être envisagées.

Dans tous les cas, il conviendra, pour déterminer le moment auquel l'agent acidogène doit être introduit, de tenir compte de sa cinétique d'hydrolyse à la température du lait au moment de l'introduction et jusqu'à l'emprésurage.

Dans certains cas, on préférera choisir une dose d'agent acidogène telle que, après hydrolyse complète de cet agent, le lait soit au pH requis pour l'emprésurage. Dans d'autres cas, cette dose pourra être supérieure, de sorte que l'hydrolyse de l'agent acidogène au pH déterminé pour l'emprésurage soit incomplète, favorisant ainsi l'acidification ultérieure du lait emprésuré.

Ainsi une dose appropriée d'acidogène peut permettre une maîtrise de l'acidification au cours des étapes de fabrication qui suivent l'emprésurage, notamment en assurant une baisse de pH reproductible de l'emprésurage à la coagulation et ensuite au moins jusqu'au décaillage.

Cette acidification contrôlée à l'emprésurage et au cours des étapes qui suivent l'emprésurage est avantageusement pratiquée quand les ferments employés pour l'acidification ultérieure du caillé ont un temps de latence important, notamment dans le cas d'emploi de ferments pour l'ensemencement direct du lait, utilisés sous forme congelée ou lyophilisée.

De la même façon, la société demanderesse a observé que l'acidification contrôlée à l'emprésurage et au cours des étapes qui suivent l'emprésurage, permet, dans certaines conditions, une réduction des temps de fabrication.

Outre les avantages techniques liés à la maîtrise du pH durant la maturation et de ce fait à l'amélioration des possibilités d'automatiser les lignes de production de fromages à pâte pressée non cuite ou semi-cuite, la Société Demanderesse a, comme il a été dit plus haut, mis en évidence le fait que le remplacement des ferments lactiques par un agent acidogène lors de la phase de maturation du lait était, de façon inattendue, sans incidence significative sur les caractéristiques de texture et de goût des fromages à pâte pressée non cuite ou semi-cuite affinés.

Le procédé selon l'invention n'implique toutefois pas pour autant l'élimination des ferments lactiques ou de tout autre ferment. Il est en effet possible d'introduire des ferments lactiques ou tout autre micro-organisme au cours de la mise en oeuvre du procédé selon l'invention en une quantité et à un moment qui seront fonction des objectifs technologiques ou qualitatifs recherchés tels que, par exemple, des caractères organoleptiques particuliers.

Ainsi, des ferments lactiques pourraient être introduits au niveau de la maturation, mais il faudra alors que leur quantité soit suffisamment faible pour ne pas influencer de façon significative la cinétique de diminution du pH, afin de ne pas retrouver les inconvénients de l'art antérieur. En revanche, la quantité de ferments lactiques pourra être plus importante si on les apporte au moment de l'emprésurage.

Les agents acidogènes utilisés de préférence dans le cadre de l'invention sont les gluconolactones et les glucoheptonolactones, de préférence encore les gluconolactones et notamment la gluconodeltalactone (GDL).

Outre les avantages précités, l'excellente solubilité dans les milieux aqueux de la GDL et sa cinétique d'hydrolyse aux températures traditionnellement rencontrées dans la fabrication des fromages à pâte pressée non cuite ou semi-cuite, notamment au cours de la phase de préparation du lait, la rendent parfaitement adaptée aux exigences propres à la fabrication de ces fromages.

Avantageusement, la quantité d'agent acidogène mise en oeuvre dans le cadre de l'invention est de 1 à 2000 g/hl de lait. De préférence, elle est comprise entre 2 et 500 g/hl de lait, selon l'agent acidogène utilisé.

Ainsi, dans le cas particulier où l'agent acidogène est la GDL, la quantité mise en oeuvre est avantageusement de 1 à 500 g/hl de lait. De préférence, elle est comprise entre 2 et 300 g/hl de lait, et de préférence encore entre 5 et 200g/hl de lait.

L'invention sera mieux comprise à l'aide des exemples qui suivent et qui comportent la description de modes de réalisation avantageux. Tous ces exemples ont été réalisés par l'I.T.I.L. dans les locaux de l'Ecole Nationale d'Industrie Laitière de MAMIROLLE - BESANCON (France).

Fabrication d'un fromage a pâte pressée non cuite appelé Mamirolle.

EXEMPLE 1 - Témoin

Il correspond à une fabrication standard réalisée régulièrement en vue de la commercialisation des fromages.

Réceptionné la veille au matin, le lait est laissé durant 24 heures à 6°C dans une cuve de "report".

1250 l de lait sont préparés dans les conditions industrielles normales : standardisation en composition à 29 g/l de matière grasse par mélange de 300 l de lait écrémé et de 950 l de lait entier à 38 g/l de matière grasse. Ces deux fractions subissent successivement un traitement thermique sur échangeur à plaques à 72°C durant 40 secondes avec une température de sortie de 31°C. Dans la pratique industrielle, la fraction de lait écrémé est préparée en premier : le lait entier subit un premier réchauffage jusqu'à 50°C dans l'échangeur à plaques, puis il passe dans l'écrémeuse ; le lait écrémé revient alors dans l'échangeur où il subit la fin du cycle thermique : 72°C durant 40 secondes puis refroidissement jusqu'à 31°C. 300 l de ce lait écrémé traité thermiquement sont amenés dans la cuve spécialement conçue pour la maturation du lait en vue de la fabrication de fromages à pâte pressée : cuve ovale fabriquée par la société Guérin S.A. [79210 Mauzé-sur-le Mignon -(France)]-type 3000 l, équipée de deux tranche-caillés à fils verticaux séparés de 1,5 cm environ et équipés en position basse et arrière de "sabots" servant au brassage lorsqu'on inverse le sens de rotation.

Le traitement thermique du lait entier est alors effectué et 950 l de ce lait à 31°C sont mélangés aux 300 l de lait écrémé. On obtient ainsi 1250 l de lait standardisé et traité thermiquement.

Le pH mesuré sur le lait entier au moment de son introduction à 31°C dans la cuve est de 6,70±0,02.

Un apport de sel de calcium soluble est ensuite réalisé à raison de 240 ml d'une solution comportant 520 g/l de chlorure de calcium.

La maturation est alors effectuée par un apport de ferments lactiques mésophiles selon les conditions suivantes : une préparation concentrée et congelée, commercialisée par les Laboratoires MILES - Division Marshall (rue des Longs Réages - 28230 EPERNON - France), est cultivée dans le milieu nutritif Marstar, commercialisé par ces mêmes Laboratoires, en appliquant strictement les conditions de préparation préconisées par ces Laboratoires. 0,6 % de cette culture (exprimé en volume par rapport au lait) soit 7,5 l est ensuite mélangé au cours du remplissage de la cuve avec le lait entier.

L'objectif est qu'en fin de maturation, c'est-à-dire 30 minutes après l'introduction des ferments lactiques, le pH du lait soit compris entre 6,55 et 6,60.

Dans le cas précis de cet essai, après 30 minutes de maturation, le pH est de 6,60±0,02 et la température est de 31°C.

L'emprésurage est effectué dans la cuve de maturation par apport de 0,31 ml/l de lait d'une préparation commerciale d'enzymes coagulantes renfermant 520 mg de chymosine par litre.

Le temps de prise, c'est-à-dire le temps entre l'instant où l'enzyme est ajoutée et celui où l'on constate par examen manuel le début de la coagulation, doit être de 14 minutes, il se trouve être de 15 minutes dans le cas précis de cet essai. Le lait est encore laissé à coaguler, selon les conditions traditionnelles, durant 6 minutes, ce temps étant appelé temps de durcissement.

Le coagulum est découpé dans la cuve de maturation par mise en rotation lente des deux tranche-caillés qui doivent accomplir chacun 3 tours en 1 minute. Après quoi un temps de repos de 7 minutes est observé. Le décaillage a ensuite lieu à l'aide des deux tranche-caillés : pendant 1 minute avec une vitesse de rotation de 12,5 tr/mn, puis 3 minutes avec une vitesse de 10 tr/mn. A la suite de quoi, les grains de caillé ont atteint la taille désirée, comprise entre 0,5 et 1 cm. Le mélange caillé-sérum est laissé reposer pendant 5 minutes. Le pH est alors de 6,58±0,02.

L'opération de lavage du caillé est ensuite accomplie : après élimination préalable de 30 % (par rapport au volume initial de 1250 l) de sérum surnageant à l'aide d'une pompe dont l'extrémité aspirante est équipée d'une crépine, est rajouté un volume égal d'eau potable à 35°C.

On poursuit par un brassage (en inversant le sens de rotation des tranche-caillés) comportant une première phase de 6 minutes en vitesse rapide (13 tr/mn) en vue d'individualiser les grains qui ont tendance à s'agglomérer, puis une seconde phase de 2 minutes à une vitesse de 7 tr/mn. La température et alors de 31,5°C.

L'ensemble caillé-sérum est transféré par gravité dans le bac de prépressage, (longueur 1,82 m ; largeur 1,75 m ; hauteur 0,62 m, dont deux faces verticales opposée sont perforées pour permettre l'égouttage du sérum), équipé au préalable intérieurement d'une toile de lin d'une trame de l'ordre de 2 mm. Cette toile est ensuite repliée sur la partie supérieure du caillé de façon à l'enfermer totalement. L'opération de prépressage en bac est alors effectuée durant 20 minutes en répartissant sur toute la surface supérieure une charge telle qu'on ait une pression régulière d'environ 600 Pa (6 g/cm$^2$).

A la suite de quoi, on obtient une plaque de caillé ferme et cohésive qui est découpée en pains à base carrée de 38,5 cm de côté, lesquels sont ensuite positionnés chacun dans un moule et mis sous presse dans un local à 18°C.

Le pressage a alors lieu durant 8 heures environ, avec une pression de 6.10$^3$ Pa environ (60 g/cm$^2$) un retournement des pains (en vue d'une régularisation de la forme) étant réalisé 15 minutes après le début.

En fin de pressage, chaque pain est découpé en douze parallélipipèdes qui correspondent à la taille définitive des fromages (longueur : 19cm, largeur et hauteur : 6,5cm). Le pH est alors de 5,30±0,02.

Ces fromages sont immédiatement salés manuellement en surface avec du sel en cristaux, puis laissés à refroidir durant la nuit dans un local à 12°C en attendant la véritable opération de salage effectuée le lendemain matin par trempage durant 4 heures dans une saumure à 12°C, de pH 5,2 et de densité 1,180, c'est-à-dire à 275 g de sel/l de saumure.

Après sortie du bain, les fromages sont laissés ressuyer durant 20 heures environ dans un local à 12°C.

Enfin a lieu l'affinage durant 10 jours dans un local à 12°C et quasi-saturé en humidité. A raison de deux fois par semaine, les fromages sont frottés manuellement sur toutes les faces avec un chiffon trempé dans une solution constituée de :

- 10 l d'eau,
- deux doses standard de préparation commerciale lyophilisée de bactéries Brevibacterium linens, commercialisées par la société Lacto-labo [BP 10 - 23 rue du Collège - 86220 DANGE-SAINT-ROMAIN (France)], et
- d'une solution d'ammoniaque en quantité telle que le pH soit amené aux environs de 9.

L'emballage est précédé d'un séchage superficiel de quelques heures dans un local à 6-7°C, à une humidité relative (HR) de 85 % et fortement ventilé. Les fromages sont ensuite conservés à 6-7°C jusqu'à la commercialisation.

Les fromages obtenus présentent la couleur orange-rouge typique, leur pâte est très fondante. Leur extrait sec est de 48,2 %.

Les valeurs des paramètres relevés sont portées dans la première colonne du tableau récapitulatif I qui suit.

EXEMPLE 2 - selon l'invention

Il est identique à l'exemple 1 si ce n'est que :
- en début de maturation, les ferments lactiques sont supprimés et remplacés par 15 g/hl de gluconodeltalactone (GDL) cristallisée commercialisée par la société ROQUETTE Frères - 62136 LESTREM (France), introduits de la même façon, c'est-à-dire au cours du remplissage entraînant l'agitation de l'ensemble et facilitant la solubilsation de la GDL ;
- les ferments lactiques non introduits en début de maturation sont introduits lors de l'emprésurage.

Les valeurs des paramètres relevés sont portées dans la deuxième colonne du tableau récapitulatif I.

Les fromages obtenus sont très semblables en ce qui concerne l'aspect et la texture aux fromages de l'exemple 1 et aucune différence de goût n'est relevée lors de leur dégustation.

Fabrication de fromages à pâte pressée non cuite, type Mamirolle

Tableau récapitulatif I

|  | Exemple 1 | Exemple 2 |
|---|---|---|
| prép. ferments lactiques (%) | 0,6 | - |
| GDL (g/hl) | - | 15 |
| pH initial du lait (±0,02) | 6,70 | 6,72 |
| pH emprésurage (±0,02) | 6,60 | 6,57 |
| prép. ferments lactiques à l'emprésurage (%) | - | 0,6 |
| Temps de prise (mn) | 15 | 14 |
| pH en fin de décaillage (±0,02) | 6,58 | 6,55 |
| pH du fromage en fin de découpage (±0,02) | 5,30 | 5,25 |
| Extrait sec final (%) | 48,2 | 48,4 |

Fabrication d'un fromage à pâte pressée non cuite de type ST Paulin en cuve pilote de 500 l.

EXEMPLE 3 : Témoin

Réceptionné dans l'après-midi, le lait est préparé dans les conditions industrielles habituelles : standardisation de la composition en matière protéique et en matière grasse puis pasteurisation à 75°C pendant 40 secondes et refroidissement à une température d'environ 12°C.

Le lait standardisé et refroidi est ensuite ensemencé en ferments lactiques mésophiles congelés pour ensemencement direct de type DVS (Direct Vat Starters), commercialisés par la société BOLL (le Moulin d'Aulnay BP 64-91292 Arpajon Cedex France). Lorsque le pH souhaité est atteint (6,65 ± 0,02), la cuve de prématuration froide est refroidie de 12°C à 6°C de façon à arrêter la fermentation lactique jusqu'au moment de l'utilisation du lait pour la fabrication proprement dite.

Au moment de la fabrication, environ 500 l de lait sont réchauffés à 30°C et transférés en cuve pilote. Lorsque la cuve est remplie, les ferments ayant déjà été introduits la veille, on procède à l'emprésurage par apport d'une solution commerciale d'enzyme coagulante en quantité appropriée pour cette fabrication.

L'objectif de pH est de 6,58 ± 0,02 au moment de l'emprésurage. Dans le cas précis de cet essai, le pH mesuré au moment de l'emprésurage est de 6,60 ± 0,02, la température de 29,8°C.

Le temps de prise tel que défini dans l'exemple 1 doit être de 15 minutes, il se trouve être de 18 minutes dans cet essai.

Le coagulum est laissé au repos pendant le temps de durcissement qui est alors de 15 minutes. Il est ensuite découpé à l'aide de deux tranche-caillés pendant 4 minutes. On poursuit alors par un brassage en remplaçant les tranche-caillés par des pales de brassage.

On procède ensuite au lavage du caillé par soutirage d'environ un tiers du sérum et son remplacement par de l'eau à 30°C. Après un deuxième brassage et un soutirage partiel du sérum, on procède à la vidange de la cuve dans le bac de prépressage où le sérum est évacué par les parois perforées de ce bac.

Le temps de travail en cuve est jusqu'à ce moment là de 1 heure 15 minutes. Après le prépressage, le caillé partiellement égoutté, sous forme de gâteau de caillé, est ensuite découpé et mis en moules, ces moules étant mis sous presse pendant 40 minutes.

Les fromages, après pressage, poursuivent leur acidification jusqu'au moment du saumurage d'une durée de 16 heures.

Les fromages obtenus possèdent les caractéristiques organoleptiques normales des fromages de type ST Paulin : croûte lavée sèche, pâte jaune, fondante sans ouverture.

Les valeurs des paramètres relevées sont portées dans la première colonne du tableau récapitulatif II qui suit.

EXEMPLE 4 : Selon l'invention

Il est identique à l'exemple 3 si ce n'est que :
Lors de la préparation du lait, les ferments lactiques sont supprimés et remplacés par 18 g/hl de gluconodeltalactone (GDL) cristallisée, commercialisée par la société ROQUETTE Frères - 62136 LESTREM (France).

Dans la cuve remplie de lait à 12°C, maintenue en agitation, on verse la GDL sous forme de poudre. L'agitation est maintenue pendant au moins 30 minutes pour assurer la totale dissolution de la GDL et une bonne homogénéité du mélange.

Contrairement à ce qui se passe lorsque l'on utilise des ferments lactiques, l'hydrolyse de la GDL en acide gluconique permet d'obtenir un pH précis sans risque d'évolution ultérieure ; il n'est donc pas nécessaire de procéder à un refroidissement à 6°C comme dans l'exemple 3.

Le lendemain, le lait est réchauffé à 30°C pour la fabrication, comme dans l'exemple 3, mais on procède, après remplissage de la cuve à l'addition des ferments lactiques et à l'emprésurage, le rôle des ferments lactiques étant de permettre l'acidification ultérieure du caillé.

Les valeurs des paramètres relevés sont portées dans la deuxième colonne du tableau récapitulatif II. On observe notamment que l'objectif de pH à l'emprésurage de 6,58 ± 0,02 est précisément atteint avec la gluconodeltalactone. De plus, le temps de prise de 15 minutes, et le temps de travail en cuve de 1 heure 05 minutes sont améliorés par rapport au témoin de l'exemple 3.

Les fromages obtenus sont très semblables, en ce qui concerne l'aspect, la texture et les qualités organoleptiques, aux fromages de l'exemple 3.

Fabrication de fromages à pâte pressée non cuite, de type ST PAULIN.

Tableau récapitulatif II

|  | Exemple 3 | Exemple 4 |
|---|---|---|
| Ferments lactiques en prématuration froide (g) | 37 | 0 |
| GDL (g/hl) | 0 | 18 |
| pH initial du lait (±0,02) | 6,68 | 6,68 |
| pH à l'emprésurage (±0,02) | 6,60 | 6,58 |
| Ferments lactiques à l'emprésurage (g) | 0 | 6,58 |
| Temps de prise (mn) | 18 | 15 |
| Temps de travail en cuve | 1h 15mn | 1h 05mn |

**Revendications**

1. Procédé pour la fabrication de fromages à pâte pressée non cuite ou semi-cuite, caractérisé par le fait que:
   - l'on mesure le pH initial et la température initiale du lait à partir duquel doit être préparé le fromage à pâte pressée non cuite ou semi-cuite,
   - l'on sélectionne un agent acidogène dans le groupe comprenant les gluconolactones et les glucoheptonolactones,
   - l'on détermine la période de temps à l'intérieur de laquelle le pH du lait sera amené de son pH initial à un pH d'emprésurage, le pH d'emprésurage étant compris entre 6,65 et 6,30, ce pH étant le pH d'emprésurage du type de fromage à pâte pressée non cuite ou semi-cuite devant être fabriqué, ainsi que la quantité d'agent acidogène nécessaire pour amener le pH initial du lait jusqu'au susdit pH d'emprésurage, lesdites période de temps et quantité d'agent acidogène étant déterminées à partir de la connaissance de la cinétique de transformation de l'agent acidogène à ladite température du lait,
   - l'on amène le pH du lait au pH d'emprésurage par addition de ladite quantité d'agent acidogène,
   - l'on emprésure le lait ainsi acidifié par addition d'enzymes coagulantes,
   - l'on coagule le lait emprésuré et l'on procède aux étapes de
     - découpage-décaillage-brassage,
     - moulage-égouttage,
     - pressage,
     - démoulage-salage et
     - affinage.

2. Procédé selon la revendication 1, caractérisé par le fait qu'il comporte en plus une étape d'addition de ferments lactiques au lait, préalablement à l'emprésurage, lesdits ferments lactiques étant ajoutés dans un but organoleptique en une quantité telle qu'ils n'exercent pas d'influence significative sur l'acidification.

**Claims**

1. Process for manufacturing uncooked or part-cooked pressed cheeses characterized by the fact that:
   - the initial pH and the initial temperature of the milk from which the uncooked or part-cooked pressed cheese is to be prepared are measured,
   - an acidogen is selected from the group comprising gluconolactones and glucoheptonolactones,
   - the period of time within which the pH of the milk will be brought from the initial pH to a renneting pH is determined, said renneting pH being comprised between 6.65 and 6.30, said pH being the required renneting pH for the type of uncooked or part-cooked pressed cheese being manufactured, and the amount of acidogen required to bring the initial pH of the milk to the said renneting pH is determined, said period of time and said amount of acidogen being determined based on the knowledge of the kinetics of transformation of the acidogen at said temperature of the milk,
   - the pH of the milk is brought to the renneting pH by adding of the said amount of acidogen,
   - the milk thus acidified is renneted by adding coagulating enzymes,
   - the renneted milk is coagulated and it is proceeded to the successive steps of
     - cutting up-cutting with grinding-grinding,
     - moulding-draining,
     - pressing,
     - taking from the mould-salting and
     - ripening.

2. Process according to claim 1, characterized by the fact that it further comprises the step of adding lactic ferments to the milk, prior to renneting, said lactic ferments being added for an organoleptic purpose in an amount such that they do not influence significantly the acidification.

**Patentansprüche**

1. Verfahren zur Herstellung von Schnittkäse oder halbfestem Schnittkäse,
   **dadurch gekennzeichnet,**
   daß man:
   - den Anfangs-pH-Wert und die Anfangstemperatur der Milch, aus der der Schnittkäse oder der halbfeste Schnittkäse hergestellt werden soll, bestimmt;
   - ein säurebildendes Mittel aus der Gruppe der Gluconolactone und der Glucoheptonolactone auswählt;
   - die Zeitspanne bestimmt, innerhalb der der pH-Wert der Milch von deren Anfangs-pH-Wert auf einen Labzusatz-pH gebracht werden soll, wobei der Labzusatz-pH zwischen 6,65 und 6,3 liegt, und dieser pH der Labzusatz-pH vom Typ des herzustellenden Schnittkäses oder halbfesten Schnittkäses ist; sowie die Menge an säurebildendem Mittel bestimmt, die erforderlich ist, um den Anfangs-pH der Milch bis zu dem genannten Labzusatz-pH zu bringen, und wobei die Zeitspanne und die Menge an säurebildendem Mittel auf Grund der Kenntnis der Kinetik der Umwandlung des säurebildenden Mittels bei der Temperatur der Milch bestimmt werden,
   - den pH-Wert der Milch auf den Labzusatz-pH durch Zugabe der genannten Menge an säurebildendem Mittel bringt,
   - die so angesäuerte Milch durch Zugabe von koagulierenden Enzymen einlabt,
   - die eingelabte Milch koaguliert und die Verfahrensschritte:
     - Zerschneiden-Zerteilen des Bruchs-Vermengen
     - Formen-Abtropfenlassen,
     - Pressen,
     - Entformen-Salzen und
     - Affinieren
   durchführt.

2. Verfahren nach Anspruch 1,
   **dadurch gekennzeichnet,**

daß es außerdem eine Stufe des Zusatzes von Milchsäurefermenten zu der Mich vor dem Labzusatz umfaßt, wobei die Milchsäurefermente zu organoleptischen Zwecken in einer Menge zugesetzt werden, daß sie keinen Einfluß auf die Ansäuerung ausüben.